# EUROPÄISCHE PATENTANMELDUNG

(11) **EP 2 990 390 A1**
(43) Veröffentlichungstag der Anmeldung: **02.03.2016**
(21) Anmeldenummer: 14182551.3
(22) Anmeldetag: 27.08.2014
(51) Int. Cl.: C03C 3/095, C03C 3/102, C03C 3/15, C03C 3/16, C03C 4/00, C03C 4/02, C03C 4/12

(54) **Lumineszierende Glaszusammensetzung**

(71) Anmelder: D. Swarovski KG, 6112 Wattens (AT)
(72) Erfinder: Debbage, Roy, 6020 Innsbruck (AT); Haid, Rainer, 6426 Roppen (AT); Judmaier, Helmut, 6114 Kolsass (AT); Maier, Johannes, 6020 Innsbruck (AT); Meissl, Florian, 6063 Rum (AT); Sprachmann, Gerold, 6114 Kolsassberg (AT)
(74) Vertreter: Fabry, Bernd

(57) **Zusammenfassung**

Die Erfindung betrifft eine lumineszierende Glaszusammensetzung, die Oxide der seltenen Erden enthält und somit eine Identifikation des Glases und daraus gefertigter facettierter Schmucksteine ermöglicht, sowie ein Verfahren zur Identifizierung der Schmucksteine.

## Beschreibung

### GEBIET DER ERFINDUNG

Die Erfindung betrifft eine lumineszierende Glaszusammensetzung, die Oxide der seltenen Erden enthält und somit eine Identifikation des Glases und daraus gefertigter facettierter Schmucksteine ermöglicht, sowie ein Verfahren zur Identifizierung der Schmucksteine.

### STAND DER TECHNIK

Synthetische Schmucksteine aus bleifreiem sowie bleihaltigem Glas und synthetische Edelsteine werden in der Regel in völlig unterschiedlichen Qualitäten gefertigt. In vielen Ländern unterliegen Schmucksteine sogenannten Produkt-Compliance-Richtlinien, die den Gehalt von möglicherweise schädlichen Inhaltsstoffen limitieren.

Auf dem Schmuckstein-Sektor herrscht seit ca. 2005 am Weltmarkt ein starker Wettbewerb mit massivem Preisdruck. Markenprodukte werden häufig kopiert, beziehungsweise unter falscher Angabe der Herkunft gehandelt. Durch die enorme Vielfalt der gehandelten Steine, ist eine rasche Unterscheidung von Original und Kopie nur sehr schwer möglich. Die aus Markenpiraterie entstandenen Schäden sind enorm. Zusätzlich erfüllen die Schmuckstein-Kopien häufig nicht die gleichen Qualitätsstandards und Compliance-Vorschriften; schädliche Inhaltsstoffe können -je nach Land - zu enormen Haftungsproblemen führen.

Zum gegenwärtigen Zeitpunkt ist es üblich, synthetische Schmucksteine in darauf spezialisierten Labors auf Echtheit zu überprüfen. Hierzu wird die chemische Zusammensetzung des Glases des Schmucksteins ermittelt und seine Schliffgeometrie/Brillanz analysiert und verglichen. Diese Prüfungen sind relativ teuer und zeitaufwändig und für eine Schnell-Analyse am Markt nicht einsetzbar.

Eine bekannte Methode zur Identifizierung synthetischer Edelsteine ist die Markierung mit Laser-Gravuren. Diese Methode kann aufgrund ihrer hohen Kosten sowie technischer Limitierungen bei synthetischen Schmucksteinen aus Glas nur sehr begrenzt eingesetzt werden.

Um Luxusprodukte vor Marken-Piraterie zu schützen, existieren zahlreiche Produkt-Authentifizierungs-Lösungen, wie beispielsweise mehrstufige Sicherheitsaufkleber, Hologramme, Sicherheitstinten, RFID-Systeme ("radio frequency identification"), etc. Diese Methoden sind für Schmucksteine jedoch nicht anwendbar, da sie das optische Erscheinungsbild des Schmucksteins negativ beeinflussen würden.

Eine Kombination aus Lumineszenz-Markern, die auf Artikel aufgebracht oder eingebracht werden kann, ist aus der WO 2011 141461 A1 (UNI BERLIN) bekannt. Diese Lumineszenz-Marker lassen sich nicht unter Erhalt der chemischen Bindungen ins Glas einschmelzen. Nach dem Einschmelzen sind die ursprünglichen chemischen Verbindungen, die Bestandteile der Lumineszenz-Marker waren, vielmehr im Glasnetzwerk gelöst. Die Lumineszenz der patentgemäßen Keramik-Partikel geht verloren und ist deshalb in den fertigen Produkten nicht mehr detektierbar.

Lumineszierende Phosphorgläser, die mehr als 2 Mol-% bestimmter Oxide der Seltenerdmetalle enthalten, sind aus der Patentschrift US 2005 0253113 (SCHOTT) bekannt. Mit Seltenerdelementen dotierte Quarzgläser sind aus der EP 0466932 A1 (FURUKAWA) bekannt.

Glasperlen, die Dotierstoffe ausgewählt aus den seltenen Erden in Mengen von 0.5 bis 3 Mol-% enthalten, sind aus der US 7,256,398 bekannt. In diesen relativ hohen Konzentrationen sind Dotierstoffe im Glas jedoch unerwünscht, da die seltenen Erden bekannterweise die Einfärbung des Glases ändern. Darüber hinaus führen Dotierstoff-Zugaben in oben genannten Konzentrationen zu deutlichen Erhöhungen der Rohstoffkosten der Glasmischung, sodass solche Zusammensetzungen für synthetische Schmucksteine nicht mehr wirtschaftlich einsetzbar sind.

Dotierstoffe in Konzentrationen von einstelligen Prozentbereichen (1% entspricht 10.000 mg/kg) sind vergleichsweise einfach mit gängigen Analysenmethoden wie RFA nachweisbar. Allerdings führen sie zu Einfärbungen der Gläser, und sind daher in diesen Konzentrationen nicht als Dotierstoffe geeignet.

Aufgabe der vorliegenden Erfindung war es, kostengünstige, lumineszierende Glaszusammensetzungen zur Verfügung zu stellen, die so geringe Mengen an Dotierstoffen enthalten, dass sie einerseits keine Farbveränderung des Glases bewirken und andererseits eindeutig identifizierbare Banden im Emissionsspektrum aufweisen. Eine weitere Aufgabe war es, facettierte, synthetische Schmucksteine auf Basis dieser Glaszusammensetzungen zur Verfügung zu stellen. Die Dotierstoffe dienen als "Echtheits-Markierung" und ermöglichen eine Identifizierung über ein tragbares Analysegerät.

### BESCHREIBUNG DER ERFINDUNG

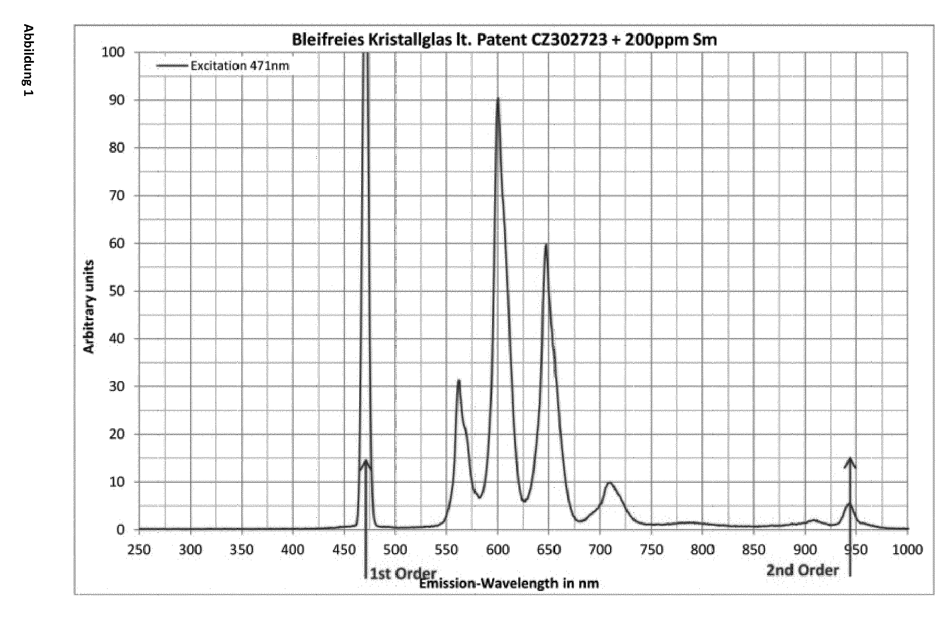

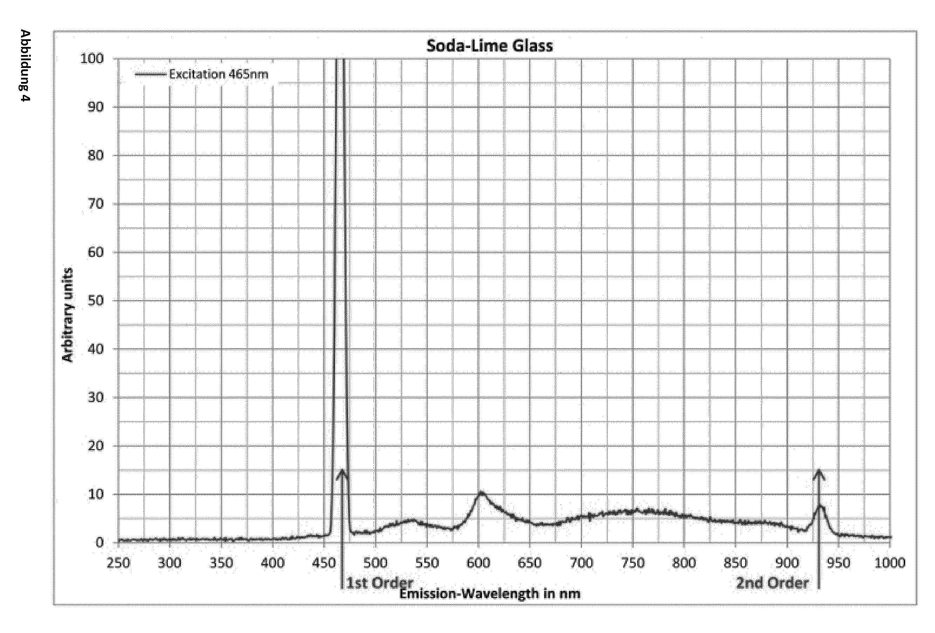

Überraschenderweise wurde gefunden, dass diese Aufgabe durch eine Glaszusammensetzung gemäß Anspruch 1 gelöst werden kann. Die Oxide der Seltenerdmetalle sind in diesen Zusammensetzungen in Konzentrationen von etwa 2 bis etwa 2.000 mg/kg der Glaszusammensetzung enthalten und liefern selbst in diesen geringen Konzentrationen eine ausreichend starke Fluoreszenzstrahlung, die eine Identifikation ermöglicht (vgl. **Abbildungen 1 bis 4**). Eine bevorzugte Ausführungsform der Glaszusammensetzung enthält die Oxide der Seltenerdmetalle in etwa 5 bis etwa 1.000 mg/kg der Glaszusammensetzung; besonders bevorzugt sind Konzentrationen von etwa 5 bis etwa 700 mg/kg und insbesondere etwa 5 bis etwa 500 mg/kg und ganz besonders bevorzugt etwa 5 bis etwa 300 mg/kg.

Die anspruchsgemäßen Zusammensetzungen zeigen nach Anregung mit Licht, insbesondere im sichtbaren Bereich, charakteristische Fluoreszenzsignale für Marker und Kristallglasmatrix, die mit entsprechenden Geräten ausgelesen werden können. Unter Oxiden der Seltenerdmetalle werden erfindungsgemäß die Oxide von Scandium, Lanthan, Cer, Praseodym, Samarium, Europium, Yttrium, Terbium, Dysprosium, Holmium, Thulium, Ytterbium und Lutetium verstanden. Vorzugsweise sind in den erfindungsgemäßen Glaszusammensetzungen wenigstens zwei, besonders bevorzugt wenigstens drei verschiedene Oxide der Seltenerdmetalle enthalten. Dies ermöglicht es, das Fluoreszenz-Emissions-Spektrum als "Finger-Print" zur Identifizierung der Glaszusammensetzung zu verwenden. Durch Variation der Konzentrationsverhältnisse der Oxide der Seltenerdmetalle in den einzelnen Chargen bei der Glasherstellung und durch Integration der Intensitäten der Peaks ist zudem nicht nur eine Authentizitätsprüfung möglich, sondern auch eine Zuordnung zu Chargen, d.h. das Herstellungsdatum kann ebenso ermittelt werden.

In einer bevorzugten Ausführungsform handelt es sich um einen facettierten Schmuckstein aus Glas, der unter Facettierung einer erfindungsgemäßen Glaszusammensetzung erhalten wurde. Die Verfahren, wie man Facettierungen erhält, sind dem Fachmann hinlänglich bekannt (z.B. durch Schleifen und Polieren oder Blankpressen). Durch die besonderen Reflexionseigenschaften von facettierten Schmucksteinen ist es möglich, bereits sehr niedrige Gehalte an Markierungselementen mithilfe von miniaturisierten Hochleistungsspektrometern zu erkennen, auch wenn vergleichsweise kleine Schmucksteine in Schmuckstücken verbaut sind. Der Grund dafür liegt in der meist mehrfachen Reflexion von Lichtstrahlen in Schmucksteinen, durch die sich eine lange Wegstrecke bzw. hohe Wahrscheinlichkeit einer Anregung ergibt. Eine quantitative Analyse der zugrundeliegenden Glaszusammensetzung und insbesondere der Dotierstoffe wäre bei solch niedrigen Konzentrationen nicht oder nur mit sehr hohem Aufwand möglich.

Zusätzlich wird insbesondere bei Verspiegelung von Schmucksteinen ("Foiling!) ein Austritt von Fluoreszenzsignalen in Betrachtungsrichtung begünstigt. Erfindungsgemäß besonders bevorzugt sind daher facettierte Schmucksteine, die partiell verspiegelt sind. Unter partieller Verspiegelung wird die Verspiegelung mindestens einer Facette oder Fläche verstanden. Beispielsweise werden bei Chatons die Pavillonflächen verspiegelt. Die Verspiegelungen sowie die Verfahren zur Verspiegelung sind dem Fachmann hinlänglich bekannt (vide infra).

Durch die Kombination unterschiedlicher Markierungselemente in variierbaren Konzentrationsverhältnissen, kann - wie oben erwähnt - eine Art innere Codierung der in dieser Art markierten Kristallglasprodukte oder synthetischen Edelsteine erfolgen.

Durch die Facettierung von Schmucksteinen und die dadurch erhöhte Reflexion im Vergleich zu ungeschliffenen Glasstücken kann mit sehr geringen Konzentrationen der Dotierstoffe gearbeitet werden (vide supra), sogar im Bereich von 5 bis 300 mg/kg.

### ANREGUNG UND DETEKTION

Die Detektion der Markierung erfolgt mit tragbaren optischen Analysegeräten, welche das Glas bzw. die facettierten Schmucksteine mit elektromagnetischer Strahlung in ausgewählten Wellenlängenbereichen anregen. Die Fluoreszenzemissionsstrahlung und - fakultativ - deren Abklingverhalten werden anschließend wellenlängenselektiv ausgelesen und mithilfe von geeigneten Algorithmen analysiert, um die Echtheit des Schmucksteins zu erkennen. Derartige Analysegeräte werden beispielweise von der Firma Swiss Authentication Research and Development AG hergestellt und vertrieben. Erfindungsgemäß bevorzugt ist es, dotierte Glaszusammensetzungen einzusetzen, die bei Anregung durch elektromagnetische Strahlung eine Fluoreszenz im Bereich von 300 bis 3.000 nm, vorzugsweise im Bereich 300 bis 1.100 nm aufweisen.

Ebenfalls Gegenstand der Erfindung ist ein Verfahren zur Identifikation eines facettierten Glaskörpers umfassend folgende Schritte:
(a) Bereitstellen eines erfindungsgemäßen facettierten Glaskörpers;
(b) Anregung mit elektromagnetischer Strahlung;
(c) Detektion der erzeugten Fluoreszenz und
(d) gegebenenfalls Vergleich des Signals mit einem vorgegebenen Muster.

Vorzugsweise wird die Anregung wellenlängenselektiv vorgenommen, besonders bevorzugt bei Wellenlängen von 300 bis 780 nm. In einer bevorzugten Ausführungsform dient das Verfahren zur Identifikation der Produktionscharge des facettierten Glaskörpers.

### GLASZUSAMMENSETZUNG

Die Erfindung ist bezüglich der Zusammensetzung prinzipiell nicht limitiert. Auch synthetische Edelsteine oder Halbedelsteine sowie Keramiksteine oder synthetische Perlen können auf diese Art und Weise markiert und identifiziert werden. Erfindungsgemäß werden Glaszusammensetzungen markiert, insbesondere facettierte Glaskörper. Unter Glas wird eine eingefrorene unterkühlte Flüssigkeit verstanden, die einen amorphen Festkörper bildet. Erfindungsgemäß können sowohl dotierte, oxidische Gläser als auch Chalkogenidgläser, metallische Gläser oder nicht-metallische Gläser eingesetzt werden. Auch Oxy-Nitrid-Gläser können geeignet sein. Es kann sich um Einkomponenten- (z.B. Quarzglas) oder Zweikomponenten- (z.B. Alkaliboratglas) oder Mehrkomponentengläser (Kalk-Natron-Glas) handeln.

Die erfindungsgemäße dotierte Glaszusammensetzung kann durch Schmelzen, durch Sol-Gel-Prozesse oder auch durch Stoßwellen hergestellt werden. Die Verfahren sind dem Fachmann bekannt. Erfindungsgemäß bevorzugt sind anorganische Gläser, insbesondere oxidische Gläser. Hierzu gehören Silikatgläser, Boratgläser oder Phosphatgläser. Besonders bevorzugt sind bleifreie Gläser. Für die Herstellung facettierter Schmucksteine werden silikatische Gläser bevorzugt. Silikatische Gläser haben gemeinsam, dass ihr Netzwerk hauptsächlich aus Siliziumdioxid (SiO₂) gebildet wird. Durch Zugabe weiterer Oxide wie beispielsweise Aluminiumoxid oder verschiedener Alkalioxide entstehen die Alumo- oder Alkali-Silikatgläser. Für die Einordnung entscheidend ist, welches Oxid mengenmäßig das zweithäufigste im silikatischen Grundglas ist. Ein Silikatglas ohne weitere Bestandteile - also reines SiO₂ - wird als Kiesel- oder Quarzglas bezeichnet. Treten als Hauptnetzwerkbildner eines Glases Phosphorpentoxid oder Bortrioxid auf, spricht man von Phosphat- bzw. Boratgläsern, deren Eigenschaften ebenfalls durch Zugabe weiterer Oxide eingestellt werden können. Die genannten Gläser bestehen größtenteils aus Oxiden, weshalb man sie zusammenfassend als oxidische Gläser bezeichnet.

In einer bevorzugten Ausführungsform enthält die dotierte Glaszusammensetzung neben den Dotierstoffen folgende Komponenten:
(a) etwa 35 bis etwa 85 Gew.-% SiO₂;
(b) 0 bis etwa 20 Gew.-% K₂O;
(c) 0 bis etwa 20 Gew.-% Na₂O;
(d) 0 bis etwa 5 Gew.-% Li₂O;
(e) 0 bis etwa 13 Gew.-% ZnO;
(f) 0 bis etwa 11 Gew.-% CaO;
(g) 0 bis etwa 7 Gew.-% MgO;
(h) 0 bis etwa 10 Gew.-% BaO;
(i) 0 bis etwa 4 Gew.-% Al₂O₃;
(j) 0 bis etwa 5 Gew.-% ZrO₂;
(k) 0 bis etwa 6 Gew.-% B₂O₃;
(l) 0 bis etwa 3 Gew.-% F;
(m) 0 bis etwa 2,5 Gew.-% Cl.

Vorzugsweise enthält die erfindungsgemäße Glaszusammensetzung:
(a) etwa 45 bis etwa 75 Gew.-% SiO₂;
(b) 0 bis etwa 10 Gew.-% K₂O;
(c) etwa 5 bis etwa 20 Gew.-% Na₂O;
(d) etwa 0,5 bis etwa 5 Gew.-% Li₂O;
(e) etwa 3 bis etwa 13 Gew.-% ZnO;
(f) etwa 2 bis etwa 11 Gew.-% CaO;
(g) 0 bis etwa 7 Gew.-% MgO;
(h) 0 bis etwa 10 Gew.-% BaO;
(i) etwa 0,5 bis etwa 4 Gew.-% Al₂O₃;
(j) etwa 0,5 bis etwa 4 Gew.-% ZrO₂;
(k) etwa 1 bis etwa 6 Gew.-% B₂O₃;
(l) 0 bis etwa 3 Gew.-% F;
(m) 0 bis etwa 2,5 Gew.-% Cl.

Erfindungsgemäß besonders bevorzugt ist eine Zusammensetzung enthaltend:
(a) etwa 48 bis etwa 65 Gew.-% SiO₂;
(b) etwa 1 bis etwa 5 Gew.-% K₂O;
(c) etwa 10 bis etwa 17 Gew.-% Na₂O;
(d) etwa 0,5 bis etwa 3 Gew.-% Li₂O;
(e) etwa 7 bis etwa 13 Gew.-% ZnO;
(f) etwa 4 bis etwa 11 Gew.-% CaO;
(g) 0 bis etwa 3 Gew.-% MgO;
(h) 0 bis etwa 1 Gew.-% BaO;
(i) etwa 0,5 bis etwa 4 Gew.-% Al₂O₃;
(j) etwa 0,5 bis 4 Gew.-% ZrO₂;
(k) etwa 3 bis etwa 6 Gew.-% B₂O₃;
(l) 0 bis etwa 3 Gew.-% F;
(m) 0 bis etwa 2.5 Gew.-% Cl.

In einer weiteren bevorzugten Ausführungsform auf Borsilikatglasbasis enthält die dotierte Glaszusammensetzung neben den Dotierstoffen folgende Komponenten:
(a) etwa 30 bis etwa 95 Gew.-% B₂O₃;
(b) 0 bis etwa 20 Gew.-% K₂O;
(c) 0 bis etwa 25 Gew.-% Na₂O;
(d) 0 bis etwa 5 Gew.-% Li₂O;
(e) 0 bis etwa 13 Gew.-% ZnO;
(f) 0 bis etwa 11 Gew.-% CaO;
(g) 0 bis etwa 7 Gew.-% MgO;
(h) 0 bis etwa 10 Gew.-% BaO;
(i) 0 bis etwa 4 Gew.-% Al₂O₃;
(j) 0 bis etwa 5 Gew.-% ZrO₂;
(k) 0 bis etwa 6 Gew.-% B₂O₃;
(l) 0 bis etwa 3 Gew.-% F;
(m) 0 etwa bis 2,5 Gew.-% Cl.

In einer weiteren bevorzugten Ausführungsform auf Phosphatglasbasis enthält die dotierte Glaszusammensetzung neben den Dotierstoffen folgende Komponenten:
(a) etwa 30 bis etwa 95 Gew.-% P₂O₅;
(b) 0 bis etwa 30 Gew.-% K₂O;
(c) 0 bis etwa 30 Gew.-% Na₂O;
(d) 0 bis etwa 10 Gew.-% Li₂O;
(e) 0 bis etwa 20 Gew.-% ZnO;
(f) 0 bis etwa 20 Gew.-% CaO;
(g) 0 bis etwa 15 Gew.-% MgO;
(h) 0 bis etwa 30 Gew.-% BaO;
(i) 0 bis etwa 15 Gew.-% Al₂O₃;
(j) 0 bis etwa 15 Gew.-% SiO₂;
(k) 0 bis etwa 15 Gew.-% B₂O₃;
(l) 0 bis etwa 20 Gew.-% BaO.

Alle Mengenangaben sind dabei so zu verstehen, dass sie sich jeweils zu 100 Gew.-% ergänzen.

### GLASBESCHICHTUNG (FOILING ODER VERSPIEGELUNG)

Beschichtungen enthalten üblicherweise eine Schicht eines Metalls und/oder einer Metallverbindung wie beispielsweise Metalloxide, Metallnitride, Metallfluoride, Metallcarbide oder eine beliebige Kombination dieser Verbindungen in beliebiger Reihenfolge, die mittels einer der gängigen Beschichtungsverfahren auf die facettierten Schmucksteine aufgebracht werden. Es können auch aufeinanderfolgende Schichten verschiedener Metalle oder Metallverbindungen aufgebracht werden. Die Verfahren und Beschichtungen sind dem Fachmann hinlänglich bekannt.

Zu den Verspiegelungsverfahren zählen unter anderem PVD (physical vapour deposition), CVD (chemical vapour deposition), Lackieren sowie nasschemische Verfahren gemäß Stand der Technik.

### ALLGEMEINES MESSPRINZIP FÜR DIE FLUORESZENZSPEKTREN

Geeignete Messgeräte werden von der Firma Swiss Authentication Research and Development AG vertrieben (vide supra). Dabei wird die von einer oder mehreren Lichtquellen emittierte Strahlung unterschiedlicher Wellenlängenbereiche spektral aufgeteilt und über eine Anordnung von optischen Elementen und Spaltblenden selektiert. Die in der Art spektral begrenzte Strahlung wird über Strahlformungselemente gebündelt und auf das zu messende Objekt gelenkt. Kommt es durch oben genannte Bestrahlung des Probenobjekts zu einer Emission, so tritt diese in die das Messobjekt umgebende Probenkammer aus. Über einen optischen Aufbau (Detektoraufbau), der dem Detektor vorgeschalten ist, wird die emittierte Strahlung wiederum spektral aufgeteilt und geometrisch auf den Detektor ausgerichtet. Dies kann mittels Spiegelsysteme sowohl unter einem rechten Winkel zur Anregungsstrahlung als auch unter kleinem Winkel zum Lot der Anregungsstrahlung erfolgen. Der Detektoraufbau besteht im Wesentlichen aus einer Anordnung von lichtempfindlichen Sensoren (Array). Durch die vorher beschriebene geometrische Justierung der spektral zerlegten Strahlung auf die Anordnung der Detektionselemente können den einzelnen Sensoren Wellenlängenbereiche zugeteilt werden. Das Auslesesystem enthält eine programmierbare elektronische Einheit, welche die Aufbereitung und digitale Auswertung der empfangenen Signale ermöglicht. Das erhaltene Messsignal kann so digital verarbeitet und gespeichert werden.

Die nachfolgenden Zusammensetzungen der Tabelle 1 zeigen neben der typischen Emission der jeweiligen Glasmatrix (Glasfluoreszenz), die bei den verschiedenen Gläsern in unterschiedlichen Bereichen liegt, allesamt ein Fluoreszenzspektrum, welches eine eindeutige Identifizierung zulässt (vgl. Abbildungen 1-4). Beispielhaft sind nachfolgend die Spektren der erfindungsgemäßen Beispiele V1, V2, und V3 abgebildet. Zu beachten ist, dass in den Abbildungen auch die im Probenraum des Messgerätes gestreute Anregungsstrahlung abgebildet wird. Sichtbar ist diese als erste und zweite Ordnung der gestreuten Anregungsstrahlung. Beispielhaft für V1 ist die Anregung bei 471nm (erste Ordnung) und 942nm (zweite Ordnung) erkennbar. Die Peaks bei diesen Wellenlängen stellen daher Messartefakte dar und sind zu vernachlässigen.

### SIMULATION DER FLUORESZENZ-EMISSION

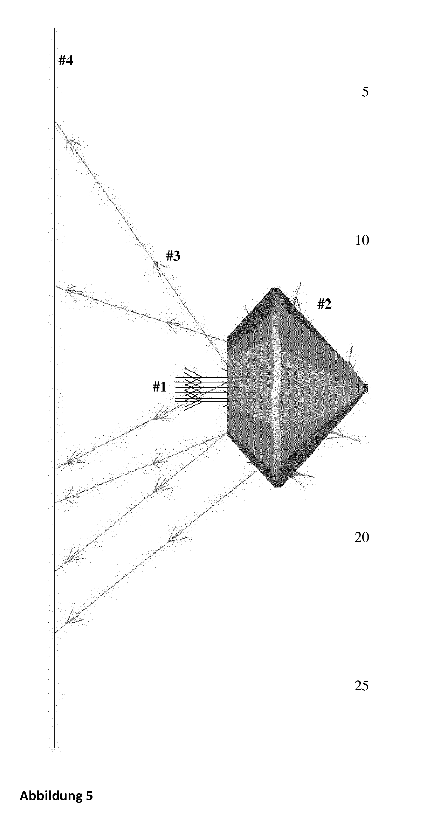

Um die Fluoreszenz-Emission von nicht-facettiertem und facettiertem Glas zu vergleichen sowie die Auswirkung einer Verspiegelung der facettierten Glassteine zu untersuchen, wurden Simulationen zur Fluoreszenz-Emission mittels der Raytracing-Software Zemax^{®} der Firma Radiant Zemax durchgeführt (Aufbau vgl. Abbildung 5).

Es wurden drei verschiedene Fluoreszenz-Emissionen simuliert:
(i) Für eine Glaskugel mit Radius 4 mm und den im Programm vorhandenen Parametern für Schott-N-BK7 Glas; 2,2 mm Abstand von der Lichtquelle
(ii) Für einen Xilion^{®} 1028 SS39 Chaton der Firma Swarovski mit einem Durchmesser von 8,3 mm und einer Gesamtlänge von 5,8 mm und den im Programm vorhandenen Parametern für Schott-N-BK7^{®} Glas; 2,2 mm Abstand von der Lichtquelle; Tafelfläche des Chatons senkrecht zur Ausbreitungsrichtung des Lichtes
(iii) Für den Chaton entsprechend b), dessen Pavillon-Facetten als verspiegelt simuliert wurden (d.h. Pavillon-Facetten wurden als total reflektierend angenommen)

Die Lichtquelle wird in der Simulation als perfekt kollimiert angenommen, mit einer Gesamtleistung von 1 Watt, einem Radius von 1mm und einer emittierten Wellenlänge von 450nm; Die Lichtquelle wird in der Simulation so positioniert, dass der Einfall der Lichtstrahlen auf die Objekte senkrecht zur Tangentialbene des Eintrittspunktes (im Falle der Kugel) bzw. senkrecht zur Tafelebene und durch den Umkreismittelpunkt der Tafel (im Falle des Chatons) ist.

Über den Parameter "freie Weglänge" wurde definiert, wie weit die auftreffenden Strahlen in das Glasobjekt eindringen, bevor sie absorbiert und dann in Form von Fluoreszenzstrahlen (650nm) emittiert werden. Dies entspricht einer Simulation unterschiedlicher Konzentrationen an Dotierstoff in der Glaszusammensetzung. Je kleiner die freie Weglänge, desto höher ist die Konzentration an Dotierstoff; je größer die freie Weglänge, desto geringer ist die Konzentration an Dotierstoff.

In der Simulation diente als Detektor für die Fluoreszenz-Emission ein Rechteck der Fläche 30 mm x 30 mm, welches im Abstand von -5mm (d.h. 5mm hinter der Lichtquelle; vgl. **Abbildung 5****)** von der Lichtquelle senkrecht zur Strahlachse der Lichtquelle platziert wurde und nur die emittierte Strahlung (650nm) aufzeichnete.

Die auf das jeweilige Glasobjekt a) bis c) auftreffenden Strahlen unterlagen der Snellius'schen Brechung und Reflektion. Die von der Lichtquelle ausgehende Strahlung der Wellenlänge 450nm wurde durch die Glaskörper in unterschiedlichem Maß als Fluoreszenzstrahlung der Wellenlänge 650nm emittiert.

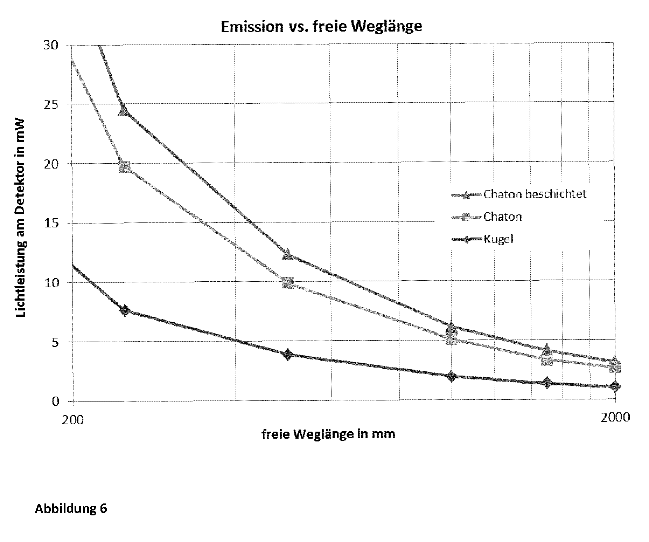

Verglichen wurde die auf dem Detektor auftreffende Lichtleistung bei den drei unterschiedlichen Geometrien. Die Simulationen (Abb. 6) zeigen eindeutig, dass im Falle einer Kugel-Geometrie (a) die geringste Fluoreszenz-Emission auftritt. Die Fluoreszenz-Emission des Xilion^{®} 1028 Chatons SS39 ist über den gesamten freien Weglängen-Bereich mehr als 2 Mal so hoch; dies entspricht einer mehr als 100%-igen Steigerung der Fluoreszenz. Ein beschichteter/verspiegelter Chaton zeigt nochmals eine - obgleich weniger deutlich ausfallende - Steigerung der Fluoreszenz-Emission.

### ABBILDUNSGVERZEICHNIS

Abbildung 1: Gemessene Fluoreszenz-Emission eines bleifreien Kristallglases gemäß Beispiel 1 mit 200 ppm Sm₂O₃-Zusatz (Anregung bei 471nm)
Abbildung 2: Gemessene Fluoreszenz-Emission eines Hochbleikristallglases gemäß Beispiel 2 mit 60 ppm Dy₂O₃ und 150ppm Tb₂O₃ Zusätzen (Anregung bei 453nm)
Abbildung 3: Gemessene Fluoreszenz-Emission eines Kalk-Natron Glases gemäß Beispiel 3 mit 5 ppm Eu₂O₃ Zusatz (Anregung bei 465nm)
Abbildung 4: Gemessene Fluoreszenz-Emission eines Kalk-Natron Glases ohne Zusätze (Anregung bei 465 nm); Vergleichsbeispiel
Abbildung 5: Schematische Darstellung des Simulationsaufbaus mit folgender Legende:
   #1 Lichtquelle mit kollimierten Strahlen der Wellenlänge 450nm;
   #2 Chaton-Geometrie;
   #3 Fluoreszenz-Emission bei 650nm;
   #4 Detektor
Abbildung 6: Simulation der Fluoreszenz-Emission in Abhängigkeit der Geometrie und der freien Weglänge

### BEISPIELE

### BEISPIELE 1 bis 15

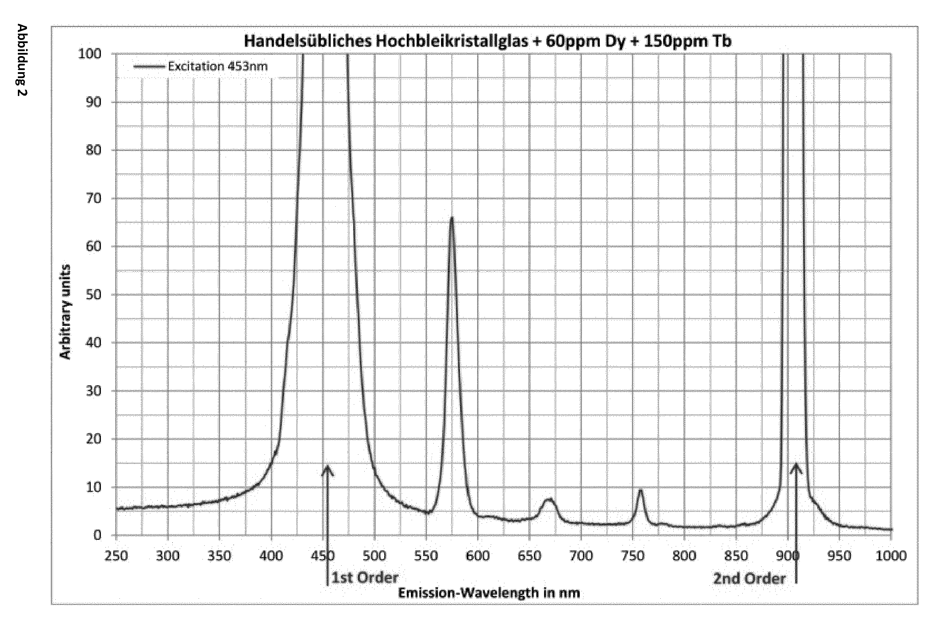

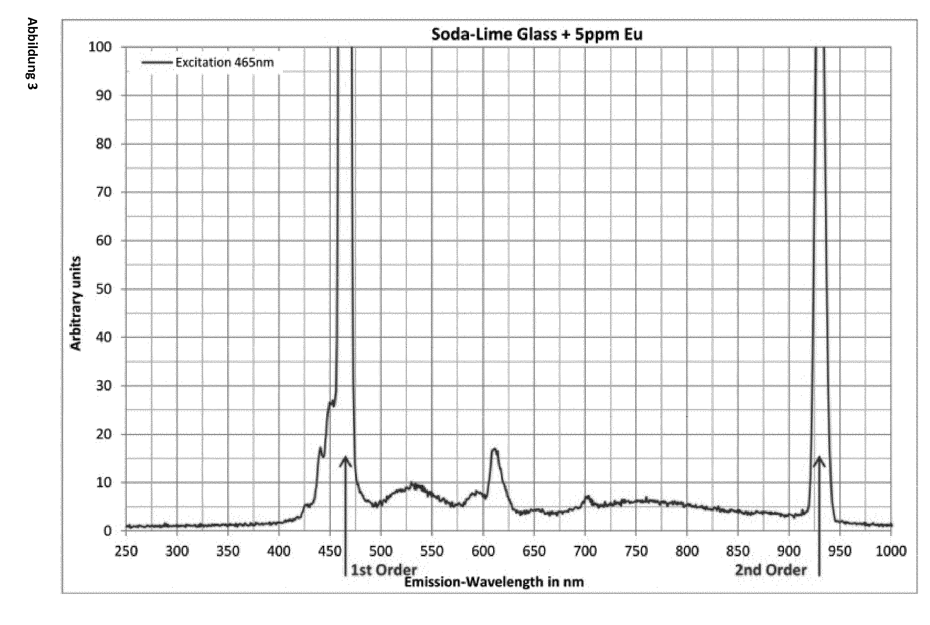

In der folgenden Tabelle 1 sind die Oxid-Zusammensetzungen verschiedener erfindungsgemäßer Gläser wiedergegeben. Alle Mengenangaben verstehen sich als Gew.-%. Dabei beziehen sich die Beispiele auf folgende Gläser:
Beispiel 1: Bleifreies Kristallglas It. Patent CZ302723 (vgl. Abbildung 1)
Beispiel 2: Handelsübliches Hochbleikristallglas (vgl. Abbildung 2)
Beispiel 3: Handelsübliches Kalk-Natron-Glas (vgl. Abbildung 3)
Beispiel 4: Standard Optisches Glas N-BK7^{®}
Beispiel 5: Handelsübliches Borosilikatglas
Beispiele 6 bis 15: Handelsübliche Farbgläser

Alle Gläser enthalten die Dotierungsstoffe in den erfindungsgemäßen Mengen.

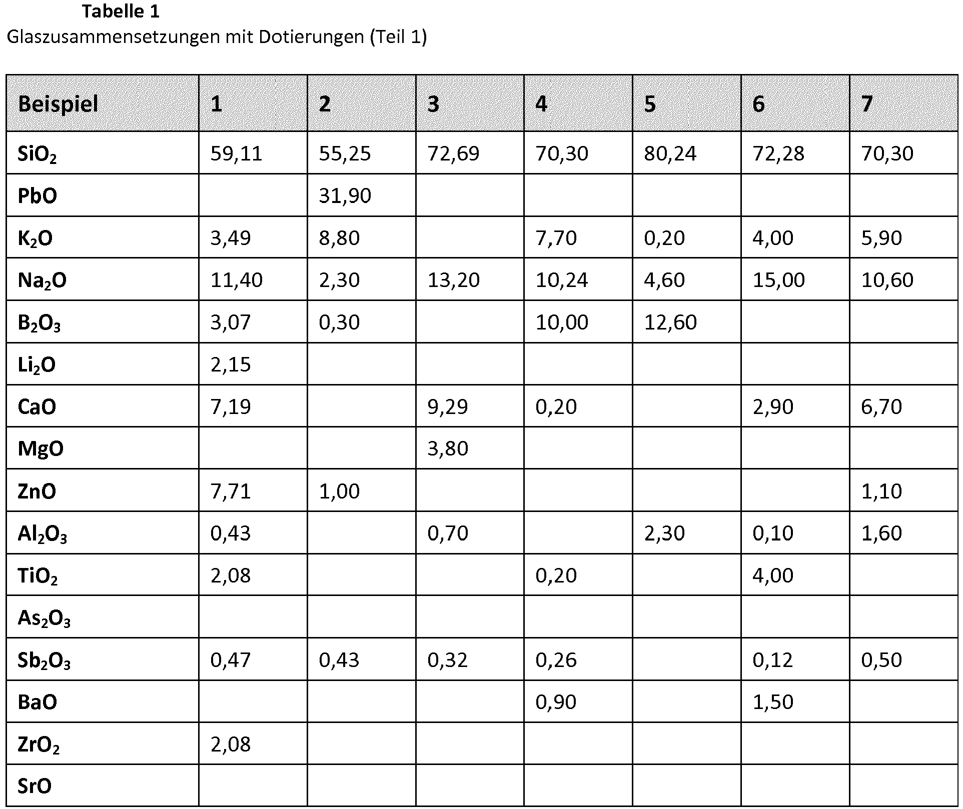

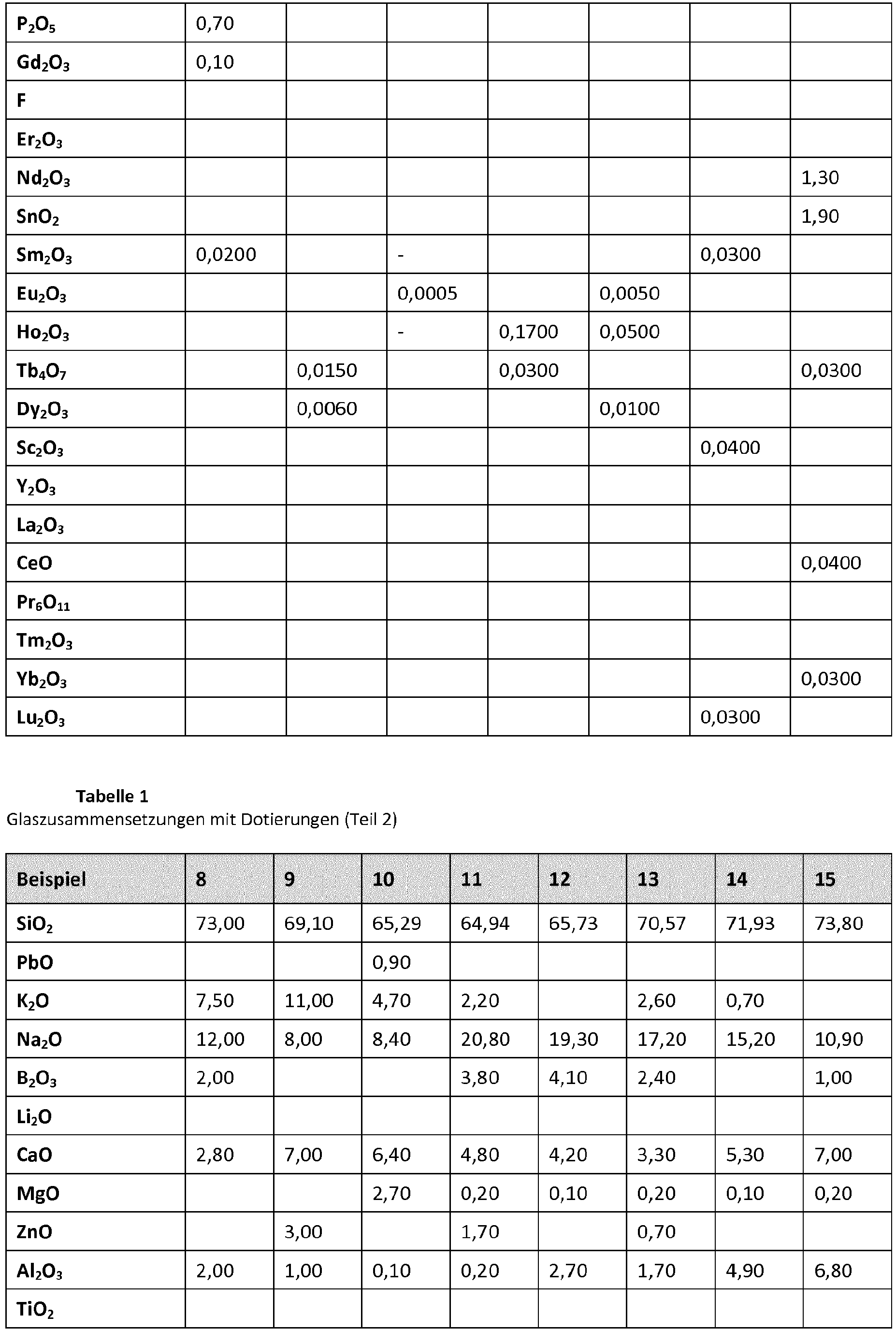

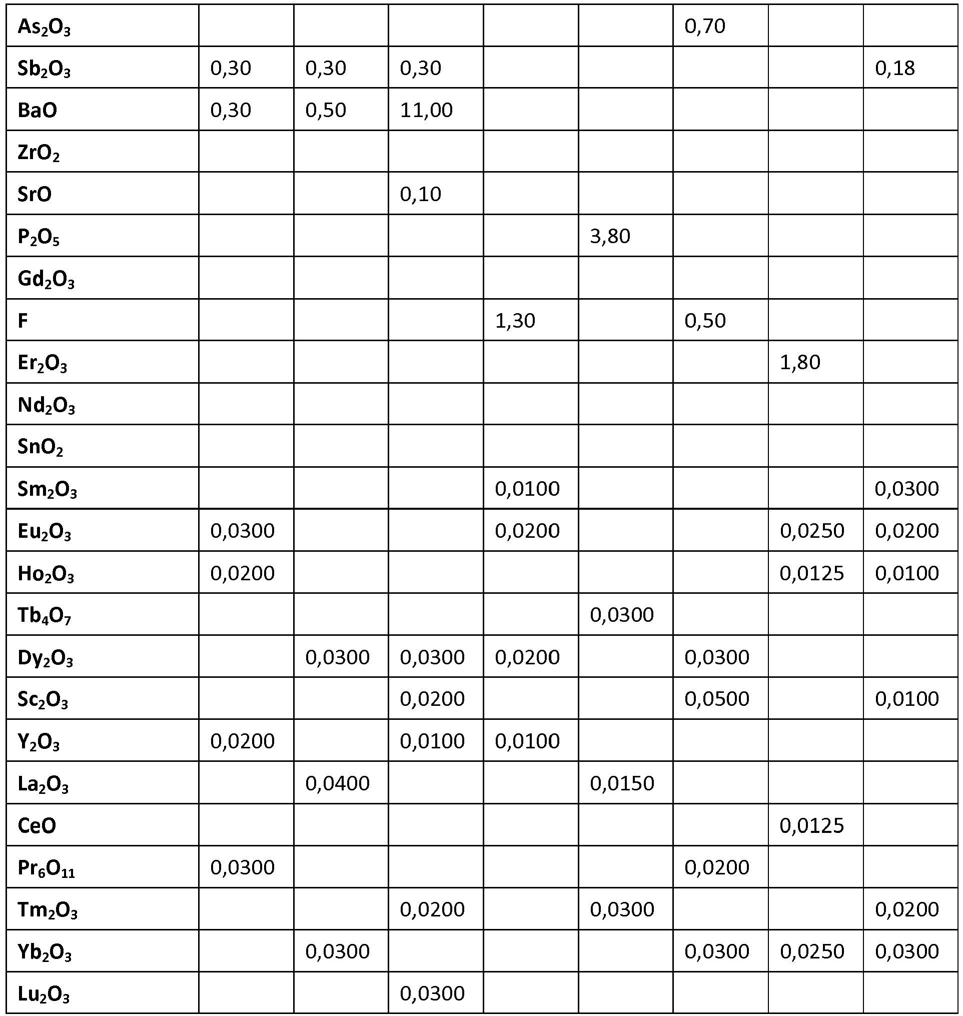

## Patentansprüche

1. Glaszusammensetzung, enthaltend wenigstens einen Dotierstoff ausgewählt aus der Gruppe der Oxide der Seltenerdmetalle, **dadurch gekennzeichnet dass** die Gesamtmenge der Oxide der seltenen Erden 2-2000 mg/kg der Glaszusammensetzung beträgt.

2. Glaszusammensetzung nach Anspruch 1, **dadurch gekennzeichnet, dass** die Gesamtmenge der Oxide der seltenen Erden 5-700 mg/kg der Glaszusammensetzung beträgt.

3. Glaszusammensetzung nach den Ansprüchen 1 und/oder 2, **dadurch gekennzeichnet, dass** das Glas ein anorganisches Glas, vorzugsweise ein oxidisches Glas ist.

4. Glaszusammensetzung nach Anspruch 3, **dadurch gekennzeichnet, dass** das oxidische Glas ausgewählt ist aus den Silikatgläsern, den Boratgläsern, den Phosphatgläsern.

5. Glaszusammensetzung nach wenigstens einem der vorhergehenden Ansprüche 1 bis 4, **dadurch gekennzeichnet, dass** die Seltenerdmetalle ausgewählt sind aus der Gruppe Scandium, Lanthan, Cer, Praseodym, Samarium, Europium, Yttrium, Terbium, Dysprosium, Holmium, Thulium, Ytterbium und Lutetium.

6. Glaszusammensetzung nach wenigstens einem der vorhergehenden Ansprüche 1 bis 5, **dadurch gekennzeichnet, dass** ein Gemisch aus wenigstens zwei, vorzugsweise wenigstens drei Oxiden der Seltenerdmetalle eingesetzt wird.

7. Glaszusammensetzung nach wenigstens einem der vorhergehenden Ansprüche 1 bis 6, **dadurch gekennzeichnet, dass** sie bei Anregung durch elektromagnetische Strahlung eine Fluoreszenz im Bereich von 300 bis 3000 nm, vorzugsweise im Bereich 300 bis 1100 nm aufweisen.

8. Glaszusammensetzung nach wenigstens einem der vorhergehenden Ansprüche 1 bis 7, **dadurch gekennzeichnet, dass** sie folgende Komponenten umfasst:
(a) 35 bis 85 Gew.-% SiO₂;
(b) 0 bis 20 Gew.-% K₂O;
(c) 0 bis 20 Gew.-% Na₂O;
(d) 0 bis 5 Gew.-% Li₂O;
(e) 0 bis 13 Gew.-% ZnO;
(f) 0 bis 11 Gew.-% CaO;
(g) 0 bis 7 Gew.-% MgO;
(h) 0 bis 10 Gew.-% BaO;
(i) 0 bis 4 Gew.-% Al₂O₃;
(j) 0 bis 2 Gew.-% ZrO₂;
(k) 0 bis 4 Gew.-% B₂O₃;
(l) 0 bis 3 Gew.-% F,
(m) 0 bis 2,5 Gew.-% Cl.
wobei sich die Mengenangaben zu 100 Gew.-% ergänzen.

9. Glaszusammensetzung nach wenigstens einem der Ansprüche 1 bis 7, **dadurch gekennzeichnet, dass** sie folgende Komponenten umfasst:
(a) 30 bis 95 Gew.-% B₂O₃ ;
(b) 0 bis 20 Gew.-% K₂O;
(c) 0 bis 25 Gew.-% Na₂O;
(d) 0 bis 5 Gew.-% Li₂O;
(e) 0 bis 13 Gew.-% ZnO;
(f) 0 bis 11 Gew.-% CaO;
(g) 0 bis 7 Gew.-% MgO;
(h) 0 bis 10 Gew.-% BaO
(i) 0 bis 4 Gew.-% Al₂O₃;
(j) 0 bis 5 Gew.-% ZrO₂;
(k) 0 bis 6 Gew.-% B₂O₃;
(l) 0 bis 3 Gew.-% F;
(m) 0 bis 2,5 Gew.-% Cl.
wobei sich die Mengenangaben zu 100 Gew.-% ergänzen.

10. Glaszusammensetzung nach wenigstens einem der Ansprüche 1 bis 7, **dadurch gekennzeichnet, dass** sie folgende Komponenten umfasst:
(a) 30 bis 95 Gew.-% P₂O₅;
(b) 0 bis 30 Gew.-% K₂O;
(c) 0 bis 30 Gew.-% Na₂O
(d) 0 bis 10 Gew.-% Li₂O;
(e) 0 bis 20 Gew.-% ZnO;
(f) 0 bis 20 Gew.-% CaO;
(g) 0 bis 15 Gew.-% MgO;
(h) 0 bis 30 Gew.-% BaO;
(i) 0 bis 15 Gew.-% Al₂O₃;
(j) 0 bis 15 Gew.-% SiO₂;
(k) 0 bis 15 Gew.-% B₂O₃;
(l) 0 bis 20 Gew.-% BaO.
wobei sich die Mengenangaben zu 100 Gew.-% ergänzen.

11. Facettierter Schmuckstein aus Glas, der durch Facettierung einer Glaszusammensetzung nach wenigstens einem der vorhergehenden Ansprüche erhalten wurde.

12. Facettierter Schmuckstein gemäß Anspruch 11, der partiell verspiegelt ist.

13. Verfahren zur Identifikation eines facettierten Glaskörpers umfassend folgende Schritte:
(a) Bereitstellen eines facettierten Glaskörpers gemäß Anspruch 11 bis 12
(b) Anregung mit elektromagnetischer Strahlung
(c) Detektion der erzeugten Fluoreszenz und
(d) gegebenenfalls Vergleich des Signals mit einem vorgegebenen Muster.
